# EUROPEAN PATENT APPLICATION

(11) **EP 1 018 300 A1**
(43) Date of publication of application: **12.07.2000**
(21) Application number: 99310390.2
(22) Date of filing: 22.12.1999
(51) Int. Cl.: A01N 59/00

(54) **Stable biocidal compositions**

(30) Priority: 07.01.1999 US 115061 P
(71) Applicant: ROHM AND HAAS COMPANY, Philadelphia, Pennsylvania 19106-2399 (US)
(72) Inventor: El A'mma, Beverly Jean, Perkiomenville, Pennsylvania 18074 (US); Berrios, Efrain, Bristol, Pennsylvania 19007 (US); Hansen, George Albert, Chalfont, Pennsylvania 18914-2034 (US)
(74) Representative: Buckley, Guy Julian

(57) **Abstract**

Disclosed is a method of stabilizing biocidal compositions of halogencontaining compounds by the addition of certain acids. Degradation of the halogen-containing compounds is reduced, thereby reducing the formation of halo-cyanides in these compositions.

## Description

### BACKGROUND OF THE INVENTION

The present invention relates to a method for stabilizing biocidal compositions containing a biocidal halogen-containing compound. In particular, the present invention relates to the addition of certain acids to such compositions in order to reduce degradation of the halogen-containing compound, thereby reducing the formation of halo-cyanides.

There are available biocidal compositions containing certain types of halogen-containing compounds, such as those containing dibromonitrilopropionamide (DBNPA); however, these are concerned with the use of various organic solvents to stabilize the active in aqueous solutions. See, for example, US 4,163,795 (Burk), US 4,163,795 (Burk et al.) and US 5,070105 (Segall et al.). In addition, US 5,267,135 (Gartner) discloses suspension formulations of DBNPA. None of these patents discuss or disclose the problem of halo-cyanide formation.

### STATEMENT OF THE INVENTION

The present invention is directed to comprising a halogen-containing biocidal component, an acid component, and solvent; wherein the acid component comprises an acid composition wherein the pKₐ of the acid is greater than 0 and less than 10 and the acid composition had a pH greater than 0 and less than 6.

The present invention is directed to a method of stabilizing a biocidal composition containing a biocidal halogen-containing compound, comprising addition of an acid composition wherein the pKa of the acid is greater than 0 and less than 10 and the acid composition itself has a pH of greater than 0 and less than 6.

### DETAILED DESCRIPTION OF THE INVENTION

As used in this specification, the term "antimicrobial agent" refers both to a compound capable of inhibiting microbial growth (a preservative), and a compound capable of reducing microbial concentration (a disinfecting agent), within a given system. The term "antimicrobial activity" refers to the activity of the antimicrobial agents to eliminate, inhibit or prevent the growth of microorganisms. The terms "microbial organism," "microbe" and "microorganism" are used interchangeably and refer to microorganisms such as, but not limited to: fungi, bacteria, and algae. The term "locus" or "loci" refers to an industrial system or product subject to contamination by microorganisms. The following abbreviations are used throughout this specification: AI = active ingredient, L = liter; mL = milliliter; µL = microliter; g = grams; mol = moles; mmol = millimoles; wt% = percent by weight; mp = melting point; DBFOC = N-(n-butyl)-dibromoformaldoxime carbamate; DBNPA = dibromonitrilopropionamide; TCCA = trichlorocyanuric acid; DPM= dipropylene glycol methyl ether; PnP = propylene glycol propyl ether. Ranges specified are to be read as inclusive, unless specifically identified otherwise.

The halogen-containing compounds used as biocides in the compositions of the present invention include any biocidal halogen-containing compound which produces a halo-cyanide in solution. Such compounds include, but are not limited to: haloformamides such as dihaloformaldoxime carbamates; halogenated nitrilopropionamides such as DBNPA; and halogenated isocyanurates such as TCCA. These compounds are known, and can be obtained commercially from various manufacturers.

The acids useful to stabilize the biocidal compositions of the present invention can be any acid composition wherein the pKₐ of the acid is greater than 0 and less than 10 and the acid composition itself has a pH greater than 0 and less than 6. It is preferred that the acid composition pH is 1 - 5, and most preferred is a pH of 1 - 3. Such acids include but are not limited to: mono- and poly- carboxylic acids, phosphoric acid, boric acid. It is preferred to use: acetic acid or an organic acid such as citric acid, glutaric acid or benzoic acid or an inorganic acid such as phosphoric acid. Most preferred are acetic acid and phosphoric acid. The pH of the final biocidal composition should be less than 6.

The solvents used in the compositions of the present invention can be water, organic solvent, or mixtures thereof. Any organic solvent is suitable as long as it is compatible with the end use and does not destabilize the antimicrobial agent. Suitable organic solvents include, but are not limited to: aliphatic and aromatic hydrocarbons, such as xylene and mixtures of alkylbenzenes; halogenated aliphatic and aromatic hydrocarbons, such as ethylene dichloride and monochlorobenzene; alcohols, such as monohydric, dihydric, and polyhydric alcohols; aldehydes; ketones, such as acetone, methyl ethyl ketone, and methyl iso-butyl ketone; ethers; glycol ethers; glycol ether acetates; saturated and unsaturated fatty acids having at least four carbon atoms; esters, such as ethyl acetate, butyl acetate, glycol esters, and phthalate esters; and phenols. Preferred organic solvents are glycol ethers; glycol ether acetates; aliphatic and aromatic hydrocarbons; and alcohols. It is most preferred to utilize a mixture of glycol ethers or glycol ether acetates with water.

The following examples are presented to illustrate further various aspects of the present invention, but are not intended to limit the scope of the invention in any respect.

The following Formulations are used in the Examples 1-4 below.

| **Formulation #** | **Ingredients** |
|---|---|
| Control-1 | 0.1% DBFOC* 99.9% H₂O |
| Control-2 | 5% DBFOC 95% DPM |
| A *(Comparative)* | 5% DBFOC 95% Triacetin |
| B | 5% DBFOC 38% Triacetin 57% Acetic Acid |
| C | 5% DBFOC 32% Acetic Acid, 80% 32% H₂O 31% DPM |
| D | 1.75% DBFOC* 32.8% PnP 32.8% Citric Acid 32.7% H₂O |
| E | 1.86% DBFOC* 32.7% p-Acrylic Acid 32.7% PnP 32.7% H₂O |
| F | 5% DBFOC 16.4% Benzoic Acid 41.8% H₂O 41.8% DPM |
| G | 5% DBFOC 32% Glutaric Acid 32% H₂O 31% DPM |
| H | 5% DBFOC 47.5% 0.1M Phosphate Buffer Solution 47.5% DPM |
| J *(Comparative)* | 5% DBFOC 1.3% Sulfuric Acid 93.7% H₂O |
| K *(Comparative)* | 5% DBFOC 1.3% Hydrochloric Acid 93.7% H₂O |
| L *(Comparative)* | 5% DBFOC 1.3% Nitric Acid 93.7% H₂O |
| M | 5% DBFOC 47% H₂O 47% Acetic Acid 1% Methacrylic Acid |
| N *(Comparative)* | 5% DBFOC 95% Carbowax® 200 |
| O *(Comparative)* | 20% DBNPA 40% Carbowax® 200 40% H₂O |
| P *(Comparative)* | 20% DBNPA 60% Dipropylene Glycol 20% H₂O |

| | |
|---|---|
| * Limit of solubility | |

All formulations were prepared in 20-mL glass vials by adding, in order: solvent, acid, AI. The formulations were then shaken to mix the ingredients, and then stored in ovens at the appropriate temperature (25, 40 or 55 °C). Actives were analyzed by HPLC. BrCN was determined by heating sample vials for 15 minutes at 55 °C, sampling the headspace, and analyzing by GC-MS.

### Example 1

The stability of a composition of the present invention versus a composition without acid was studied. The two formulations were identical, except that Formulation B contains acetic acid, whereas Formulation A does not.

| *Stabilization of AI in Organic Solvent by Acetic Acid* | | |
|---|---|---|
| **Form. #** | **% AI Degraded (16 Weeks/40° C)** | **% AI Degraded (4 Weeks/55° C)** |
| A* | 18 | 42 |
| B | 7 | 16 |

| | | |
|---|---|---|
| *Comparative | | |

The results clearly show that the addition of acetic acid in Formulation B greatly improves the storage stability of the composition.

### Example 2

The following example demonstrates the effect of acid pKₐ on the storage stability of various compositions.

| *AI Stabilization by Acids in Aqueous Solutions* | | | |
|---|---|---|---|
| | | **% AI Degraded** | |
| **Form. #** | **pK of acid** | **2 Weeks/55°C** | **4 Weeks/55° C** |
| Control-1 | 7 | 100 (pH 5) | N/A |
| | | 100 (pH 7) | |
| Control-2 | N/A | 56 | N/A |
| C | 4.8 | 11 | N/A |
| D | 3.1 | 10 | 20 |
| E | 4.3 | 22 | 39 |
| F | 4.2 | 16 | 30 |
| G | 3.8 | 14 | 17 |
| H | 2.15 | 24 | N/A |
| J* | -3 | 100 | 100 |
| K* | -6 | 100 | 100 |
| L* | -1 | 100 | 100 |

| | | | |
|---|---|---|---|
| *Comparative | | | |

The results clearly demonstrate that addition of acids having a pK >0 improve AI stability compared to the stability of the AI in solvent or water alone.

### Example 3

The following example demonstrates the reduction of halogen cyanide generation in compositions of the present invention, as compared to compositions without acid. Also demonstrated is the correlation between AI degradation and generation of halogen cyanide in the headspace.

| *Reduction of Headspace BrCN Generation* | | | | |
|---|---|---|---|---|
| **Form. #** | **pH of Formulation** | **% AI Degraded** | | **BrCN in Headspace (ppm) 2 weeks/55°C** |
| | | **4 Weeks/40°C** | **2 Weeks/55°C** | |
| Control-2 | N/A | 21 | 56 | N/T |
| N | N/A | 18 | 40 | 2250 |
| C | 2 | N/T | 11 | 40 |
| H | 3 | 12 | 24 | 63 |
| G | 3 | 3 7 | | 3 |
| M | 1.5 | 4 | 5 | 7 |

The results indicate that AI degradation and cyanogen bromide generation are significantly reduced in the presence of acids have a pKa of >0. The reduction in cyanogen bromide reduces the risk of inhalation exposure and corrosion due to its toxicity.

### Example 4 (Comparative)

The following comparative examples demonstrate that halogen cyanide generation is a problem with prior art compositions of halogen-containing compounds.

| *BrCN Offgassing in Some Halogen Containing Compounds (Aged 2 Weeks/55°C)* | | |
|---|---|---|
| **Form.#** | **% AI Degraded** | **BrCN in Headspace (ppm)** |
| O | 31 | 14709 |
| P | N/A | 108 |
| N | 40 | 2250 |

The results indicate that dihaloformaldoximes and certain halogen containing biocides can generate high levels of halocyanide, which leads to a serious exposure risk to the toxic gas during storage and handling.

### Example 5

This example illustrates the effect of pH on stability and generation of halogen cyanide in compositions of the present invention. Each of the samples contained: 5% DBFOC, 47.5% 0.1 M phosphate buffer solution, and 47.5% DPM. The pH of the samples were adjusted using the sodium salt of phosphoric acid.

| *pH Effect on Br CN Off gassing (Aged 4 Weeks/40°C)* | | | |
|---|---|---|---|
| **Sample #** | **pH** | **% AI Degraded** | **BrCN Remaining (ppm)** |
| 1 | 1.1 | 6 | 21 |
| 2 | 2.0 | 15 | 19 |
| 3 | 3.0 | 12 | 28 |
| 4 | 4.0 | 25 | 35 |
| 5 | 5.0 | 26 | 89 |

The results indicate that the level of BrCN can be greatly reduced by the addition of certain acids in aqueous or aqueous/solvent formulations having a pH greater than 0 and less than 6.

## Claims

1. A stable biocidal composition comprising a halogen-containing biocidal component, an acid component, and solvent; wherein the acid component comprises an acid composition wherein the pKₐ of the acid is greater than 0 and less than 10 and the acid composition has a pH greater than 0 and less than 6.

2. The composition of claim 1, wherein the halogen-containing biocide is selected from the group consisting of: haloformamides, halogenated nitrilopropionamides, and halogenated isocyanurates.

3. The composition of claim 2, wherein the halogen-containing biocide is selected from dihaloformaldoxime carbamates.

4. The composition of claim 1, wherein the acid component is selected from acid compositions comprising: mono- and poly- carboxylic acids, phosphoric acid, and boric acid.

5. The composition of claim 4, wherein the acid component is selected from acid compositions comprising: acetic acid, organic carboxylic acids, and phosphoric acid.

6. The composition of claim 1, wherein the pH of the acid component is 1 - 5.

7. The composition of claim 6, wherein the pH of the acid component is 1 - 3.

8. A method of stabilizing a biocidal composition containing a biocidal halogen-containing compound, comprising addition of an acid composition wherein the pKₐ of the acid is greater than 0 and less than 10 and the acid composition itself has a pH greater than 0 and less than 6.

9. The method of claim 8, wherein the acid composition is selected from the group comprising: acetic acid, organic carboxylic acids, and phosphoric acid.

10. The method of claim 8, wherein the halogen-containing biocide is selected from the group consisting of: haloformamides, halogenated nitrilopropionamides, and halogenated isocyanurates.
